(19) Europäisches Patentamt
European Patent Office
Office européen des brevets

(11) **EP 1 254 552 B1**

(12) **FASCICULE DE BREVET EUROPEEN**

(45) Date de publication et mention
de la délivrance du brevet:
**16.06.2010 Bulletin 2010/24**

(21) Numéro de dépôt: **01904050.0**

(22) Date de dépôt: **02.02.2001**

(51) Int Cl.:
***H04L 29/12*** *(2006.01)*

(86) Numéro de dépôt international:
**PCT/FR2001/000334**

(87) Numéro de publication internationale:
**WO 2001/058112 (09.08.2001 Gazette 2001/32)**

(54) **PROCEDE ET DISPOSITIF POUR L'ATTRIBUTION AUTOMATIQUE D'ADRESSES A UNE PLURALITE DE MODULES INTERCONNECTES PAR UN RESEAU DE COMMUNICATION A TOPOLOGIE COMPLEXE**

VERFAHREN UND VORRICHTUNG ZUR AUTOMATISCHEN ADRESSEZUORDNUNG ZU MEHREREN EINHEITEN DIE ÜBER EINEM KOMMUNIKATIONSNETZWERK MIT KOMPLEXER TOPOLOGIE MITEINANDER VERBUNDEN SIND

METHOD AND DEVICE FOR AUTOMATICALLY ATTRIBUTING ADDRESSES TO A PLURALITY OF MODULES INTERCONNECTED BY A COMMUNICATION NETWORK WITH COMPLEX TOPOLOGY

(84) Etats contractants désignés:
**AT BE CH CY DE DK ES FI FR GB GR IE IT LI LU MC NL PT SE TR**
Etats d'extension désignés:
**LV RO SI**

(30) Priorité: **07.02.2000 FR 0001559**

(43) Date de publication de la demande:
**06.11.2002 Bulletin 2002/45**

(73) Titulaire: **Edelcom**
**75012 Paris (FR)**

(72) Inventeur: **Duranton, René**
**03500 Contigny (FR)**

(74) Mandataire: **Potdevin, Emmanuel Eric et al**
**Cabinet Lhermet la Bigne & Remy**
**11 boulevard de Sébastopol**
**75001 Paris (FR)**

(56) Documents cités:
**DE-A- 19 733 906    FR-A- 2 734 111**
**US-A- 4 680 583**

**Description**

La présente invention concerne un procédé et un réseau à topologie arborescente pour l'attribution automatique d'adresses à une pluralité de modules interconnectés par ledit réseau de communication à topologie arborescente.

Elle s'applique notamment, mais non exclusivement, à une pluralité de modules interconnectés par un réseau de distribution électrique utilisé à la fois pour l'alimentation électrique des modules et comme réseau de communication pour la transmission de messages numériques entre modules par courant porteur modulé.

Elle s'applique en particulier à la télécommande et la télésurveillance des candélabres d'éclairage urbain.

Il s'avère qu'un réseau de distribution électrique présente généralement une topologie complexe comportant de nombreuses intersections réparties aléatoirement. En outre, la connaissance de la topologie exacte du réseau a bien souvent disparu, un tel réseau résultant généralement d'opérations d'installations successives effectuées sur plusieurs dizaines d'années.

Par ailleurs, si l'on souhaite pouvoir communiquer avec chaque module séparément, il est nécessaire d'attribuer une adresse propre à chaque module.

Dans le contexte d'un tel réseau, l'attribution d'une adresse à chaque module pose de nombreux problèmes.

En effet, il est d'abord nécessaire que le mode d'adressage des différents modules que l'on veut faire communiquer, puisse s'appliquer à n'importe quelle topologie de réseau. Ensuite, si l'on souhaite interconnecter un nombre important de modules, l'adressage des différents modules doit pouvoir être effectué sans manipulations fastidieuses qui entraînent d'importants risques d'erreur.

Il faut également pouvoir ajouter facilement un module dans le réseau sans que cela nécessite des interventions manuelles sur d'autres modules.

Par ailleurs, la portée des transmissions par courant porteur est relativement faible. Il est donc nécessaire de répéter les messages transmis pour qu'ils arrivent jusqu'à leur destinataire. Il faut donc que l'adresse de chaque module contienne le chemin par lequel doit transiter le message pour qu'il arrive à son destinataire, de manière à pouvoir déterminer si un message dans un chemin déterminé doit ou non être répété.

Le procédé décrit dans le brevet FR 2 734 111 déposé par le Demandeur permet de résoudre partiellement ces problèmes dans la mesure où il nécessite d'agir manuellement sur chaque module n'ayant pas encore d'adresse, et sur le module ayant déjà une adresse, situé immédiatement en amont par rapport à une unité centrale située à la racine du réseau arborescent, l'adresse du module sans adresse étant déterminée en fonction de l'adresse du module amont possédant déjà une adresse, et en fonction du nombre de modules possédant déjà une adresse, reliés directement au module avec adresse et situés en aval de celui-ci.

Ce procédé présente donc l'inconvénient de nécessiter l'intervention d'opérateurs sur le terrain qui doivent agir sur des boutons de commande prévus sur chaque module. En outre, ces modules peuvent être difficilement accessibles car par exemple installés à plusieurs mètres du sol au sommet de candélabres d'éclairage urbain. Par ailleurs, ce procédé ne permet pas de supprimer totalement tout risque d'erreur, car il est possible de déclencher l'attribution d'adresse d'un module qui n'est pas situé immédiatement en aval d'un module possédant une adresse.

La présente invention a pour but de résoudre ces problèmes. A cet effet, elle propose un procédé pour l'attribution automatique d'adresses à une multiplicité de modules interconnectés par un réseau à topologie arborescente relié à une unité centrale, l'adresse de chaque module étant déterminée à partir de l'adresse du module situé immédiatement en amont dans le réseau par rapport à l'unité centrale et ayant déjà une adresse attribuée, cette adresse étant émise sur le réseau par le module amont dans un message d'attribution d'adresse.

Selon l'invention, ce procédé est caractérisé en ce qu'il comprend une phase de recherche automatique du module n'ayant pas d'adresse attribuée, situé le plus proche en aval dans le réseau, d'un module ayant déjà une adresse attribuée, cette phase comprenant pour chaque module aval n'ayant pas encore d'adresse attribuée :

- la réception par le module aval du message d'attribution d'adresse et le déclenchement par celui-ci d'une temporisation dont la durée est d'autant plus grande que le niveau de réception du message reçu est faible,

- si à la fin de la temporisation, le module aval ne détecte dans le réseau aucun message de capture d'adresse, l'émission par celui-ci d'un message de capture d'adresse contenant l'adresse à attribuer, la mémorisation par celui-ci de l'adresse reçue en tant qu'adresse de module, et l'exécution par celui-ci de la phase de recherche automatique du module n'ayant pas d'adresse attribuée, situé le plus proche en aval dans le réseau.

Grâce à ces dispositions, invention exploite l'atténuation qui se produit dans les transmissions par courant porteur pour définir une temporisation dont la durée dépend de la distance entre le module émetteur et le module récepteur, cette temporisation étant déclenchée pour décider quel module doit s'attribuer l'adresse émise. De cette manière, le module qui s'attribue l'adresse émise est celui qui a la temporisation la plus courte et donc celui qui est le plus proche du module émetteur du message. L'invention permet également d'attribuer, de proche en proche, une adresse respective à tous les modules d'une même branche du réseau reliée à l'unité centrale, et ce d'une manière entièrement automatique et sans risque d'erreur.

En répétant cette opération pour toutes les branches du réseau, on peut ainsi attribuer d'une manière entièrement automatique une adresse à tous les modules connectés au réseau.

Avantageusement, l'adresse d'un module est déterminée en fonction de celle du module immédiatement en amont et de la présence éventuelle d'autres modules possédant déjà une adresse et situés au même niveau par rapport à l'unité centrale. Par conséquent, l'adresse de chaque module indique à elle seule la position du module par rapport aux autres modules dans le réseau.

Selon une particularité de l'invention, l'adresse d'un module donné comprend un numéro d'ordre obtenu en numérotant successivement tous les modules situés sur un chemin reliant directement le module donné à l'unité centrale, en commençant par un pour le premier module relié sur le chemin à l'unité centrale, ainsi qu'une adresse de liaison permettant de déterminer les différents tronçons de ligne constituant le chemin reliant le module à l'unité centrale. Par conséquent, si toutes les adresses attribuées sont retransmises à l'unité centrale, la liste des adresses ainsi attribuées permet de reconstituer la topologie du réseau.

Selon une autre particularité de l'invention, le procédé selon l'invention comprend une phase préalable de recherche automatique d'un module ayant une adresse, situé le plus proche en amont dans le réseau d'un module n'ayant pas d'adresse, ce module émettant sur le réseau un message de recherche de module ayant une adresse, cette phase comprenant pour chaque module ayant déjà une adresse :

- la réception par le module du message de recherche de module ayant une adresse et le déclenchement par celui-ci d'une temporisation dont la durée est d'autant plus grande que le niveau de réception du message reçu est faible,

- si à la fin de la temporisation, le module ne détecte sur le réseau aucun message de capture d'adresse contenant l'adresse à la valeur prédéterminée, l'émission par celui-ci d'un message de capture d'adresse, la détermination par celui-ci de l'adresse du module n'ayant pas d'adresse, situé immédiatement en aval dans le réseau , et l'émission d'un message d'attribution d'adresse contenant l'adresse ainsi déterminée.

Selon encore une autre particularité de l'invention, le procédé selon l'invention comprend en outre une phase préalable de recherche automatique d'un module n'ayant pas d'adresse attribuée, situé immédiatement en aval d'un module ayant déjà une adresse attribuée, cette phase étant déclenchée par l'unité centrale ou par un module ayant déjà une adresse attribuée, qui émet sur le réseau un message de recherche de module sans adresse, cette phase comprenant pour chaque module n'ayant pas d'adresse :

- la réception par le module du message de recherche de module sans adresse et le déclenchement par celui-ci d'une temporisation dont la durée est d'autant plus grande que le niveau de réception du message reçu est faible,

- si à la fin de la temporisation, le module ne détecte sur le réseau aucun message de recherche de module, l'émission par celui-ci d'un message de recherche de module en direction de l'unité centrale, ce qui a pour effet de déclencher la phase de recherche automatique d'un module ayant une adresse, situé le plus proche en amont dans le réseau d'un module n'ayant pas d'adresse.

On peut prévoir un message émis par l'unité centrale permettant d'initialiser les adresses de module mémorisées par tous ou partie des modules connectés au réseau, de manière à pouvoir attribuer ensuite de nouvelles adresses aux modules ainsi réinitialisés. De cette manière, il est possible de prendre en compte facilement la connexion d'un nouveau module entre deux modules déjà configurés.

On peut également prévoir que les messages de recherche de module sans adresse soient répétés par les autres modules de manière à ce qu'ils puissent être transmis jusqu'aux extrémités des branches du réseau.

La présente invention concerne également réseau à topologie arborescente, tel que défini dans la revendication 10.

Un mode de réalisation du procédé et du réseau selon l'invention sera décrit ci-après, à titre d'exemple non limitatif, avec référence aux dessins annexés dans lesquels

La figure 1 représente schématiquement une multiplicité de modules connectés par un réseau en étoile auquel le procédé d'adressage selon l'invention peut s'appliquer ;

La figure 2 montre la structure d'une adresse de module ;

La figure 3 représente la structure des messages transmis par le réseau ;

Les figures 4 et 5 représentent des organigrammes montrant la séquence des étapes du procédé selon l'invention ;

La figure 6 représente un module selon l'invention ;

La figure 7 montre le schéma électronique d'un circuit électronique du module, mis en oeuvre par le procédé selon l'invention ;

La figure 8 illustre sous la forme de courbes en fonction du temps le fonctionnement du circuit électronique représenté sur la figure 6.

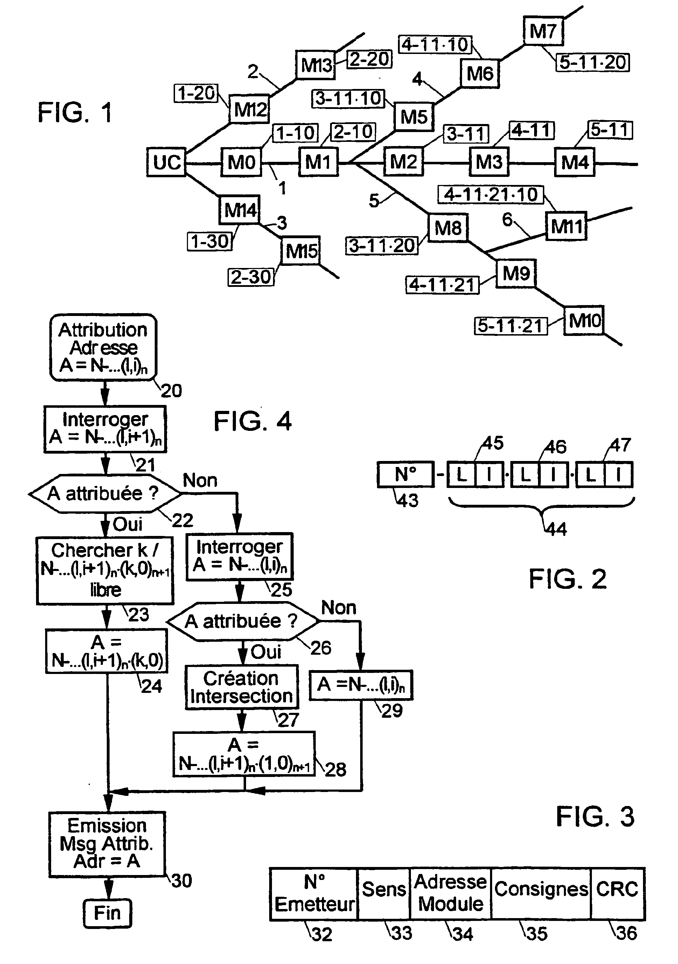

La figure 1 représente un réseau en étoile permettant de relier une unité centrale UC à une pluralité de modules électroniques M1 à M15, les différents éléments connectés par le réseau communiquant entre eux par messages par exemple émis sur le réseau par modulation d'une porteuse.
Dans un tel réseau, le procédé selon l'invention vise à attribuer automatiquement une adresse unique respective à chaque module en fonction de la position de celui-ci dans le réseau. A cet effet, l'invention exploite le phénomène d'atténuation en fonction de la distance qui se produit notamment lorsqu'on émet un signal sur une ligne d'alimentation en énergie électrique. Dans ce cas, les transmissions par le réseau sont effectuées de préférence par courant porteur bidirectionnel, par modulation en phase d'une porteuse

Chaque module Mi connecté au réseau est repéré par rapport à l'unité centrale UC, par une adresse constituée d'un numéro d'ordre 43 et d'une adresse de liaison 44 (figure 2).

Le numéro d'ordre 43 de chaque module Mi, par exemple, sur un octet, est obtenu en numérotant successivement tous les modules situés sur le chemin du réseau reliant le module Mi à l'unité centrale, en commençant par le numéro un pour le module connecté directement à l'unité centrale et situé sur le chemin considéré.

Ainsi, sur la figure 1, l'unité centrale UC est connectée à trois lignes principales 1, 2, 3, et les modules M0, M12 et M14 connectés directement à l'unité centrale portent un numéro d'ordre égal à 1, les modules M1, M13, M15 suivants portant un numéro d'ordre égal à 2, et ainsi de suite jusqu'à l'extrémité de chaque ligne principale.

Lorsque l'on rencontre une ligne secondaire, telle que 4 sur la ligne principale 1, le module M5 situé sur la ligne secondaire 4 et relié directement à la ligne principale porte le même numéro d'ordre, à savoir 3 dans l'exemple de la figure 1, que celui du module M2 situé au même niveau sur la ligne principale. Les modules M6, M7 suivants sur la ligne secondaire 4 sont numérotés à partir de ce numéro d'ordre 3. Ainsi, le numéro d'ordre 43 d'un module correspond au nombre de modules plus 1, situés entre le module considéré et l'unité centrale UC.

L'adresse de liaison 44 d'un module Mi permet de repérer le tronçon de ligne (entre deux intersections ou entre une intersection et une extrémité de ligne) auquel est connecté le module, et de déterminer le chemin reliant le module à l'unité centrale, ce numéro tenant compte de toutes les intersections se trouvant entre le module et l'unité centrale. Ainsi, cette adresse 44 est constituée par exemple de trois champs 45 à 47 ou niveaux, de deux octets chacun, le premier octet indiquant un numéro de ligne L, et le second octet un numéro d'intersection I.

Le premier niveau 45 donne le numéro de la ligne principale 1 à 3 à laquelle est relié le module, et le nombre d'intersections sur la ligne principale entre l'unité centrale UC et le module. Si les numéros de ligne L et d'intersection I du second niveau 46 sont différents de zéro, ils indiquent respectivement le numéro de ligne secondaire 4, 5 à laquelle est relié le module et le nombre d'intersections rencontrées sur la ligne secondaire en direction de l'unité centrale. De la même façon, le numéro de ligne du troisième niveau 47 permet de numéroter les lignes secondaires 6 de second rang qui partent d'une ligne secondaire de premier rang 4, 5.

Ainsi, par exemple le module M11 portant l'adresse "4-11·21·10" est le quatrième module en partant le l'unité centrale sur le chemin qui le relie à celle-ci. Le champ 47 indique qu'il est connecté à la ligne secondaire 6 de second rang n° 1. Le champ 46 indique que cette ligne secondaire est reliée à l'intersection n° 1 de la ligne secondaire 5 de premier rang n° 2, et le champ 45 indique que cette ligne secondaire 5 est reliée à l'intersection n° 1 de la ligne principale 1 n° 1.

Ce mode d'adressage d'un module permet ainsi de localiser n'importe quel module raccordé au réseau, et de déterminer le chemin qui le relie à l'unité centrale.

Sur la figure 3, chaque message transitant sur le réseau comprend les champs suivants :

- un numéro d'ordre d'émetteur 32 du dernier module réémetteur sur un octet,
- un sens de transfert 33 sur un octet, à savoir, 0 pour les messages destinés aux modules Mi, et 1 pour les messages destinés à l'unité centrale UC,
- une adresse 34, sur 7 octets, du module émetteur ou destinataire du message en fonction du sens 33,
- des consignes 35 ou informations à transmettre sur 3 octets, et
- un mot de somme de contrôle 36 sur 2 octets permettant de vérifier que le contenu du message a été correctement transmis.

Chaque module Mi qui reçoit un message, commence par déterminer s'il est le destinataire du message en lisant le champs "sens", et si le sens est égal à 0, le champ "adresse" du module destinataire. S'il n'est pas destinataire du message, le module examine les champs 32 à 34 pour déterminer s'il se trouve sur le trajet de transmission du message et à une distance suffisante de l'émetteur. Si tel est le cas, il répète le message en insérant dans le champ 32 son numéro d'ordre.

Grâce à cette structure, un message transitant sur le réseau peut être répété par les différents modules Mi du réseau, de manière à s'affranchir de la portée limitée (quelques centaines de mètres) des transmissions par courant porteur.

Afin d'éviter des manipulations complexes et sources d'erreur, l'adresse des modules est déterminée automatiquement. Dans ce qui suit, l'adresse d'un module sera notée $N\text{-}(1,i)_1 \cdot (1,i)_2 \cdot (1,i)_3$, ou plus généralement $N\text{-}...(1,i)_n$, n étant le dernier niveau 45 à 47 non nul de l'adresse de liaison 44.

D'après l'organigramme montré sur la figure 3, l'unité centrale UC exécute une procédure 20 d'attribution automatique d'adresses commençant par une phase de recherche de l'adresse suivante à attribuer (étapes 21 à 29) à partir de l'adresse

$A = "N\text{-}...(1,i)_n"$ passée en paramètre de la procédure.

A l'initialisation du réseau, la première adresse à attribuer au premier module rencontré sur le réseau à partir de l'unité centrale est égale à A = "1-10".

Cette phase commence par interroger les modules Mi pour déterminer si l'adresse $A = "N\text{-}...(1,i+1)_n"$ n'a pas déjà été attribuée (étape 21). Cette interrogation consiste à émettre un premier message d'interrogation contenant cette adresse et à se mettre en attente de la réponse pendant une durée Tmax.

Si l'unité centrale ne reçoit aucune réponse (étape 22), cela signifie que l'adresse A émise n'est pas déjà attribuée. Dans le cas présent, cela signifie également qu'une intersection n'a pas encore été détectée sur la ligne 1. Dans ce cas, elle émet un nouveau message d'interrogation contenant l'adresse $A = "N\text{-}...(1,i)_n"$ passée en paramètre de la procédure 20 (étape 25). Si aucune réponse n'est reçue, cette adresse peut donc être attribuée (étape 29) et l'unité centrale émet un message d'attribution d'adresse contenant cette adresse, dans le cas présent "1-10" (étape 30).

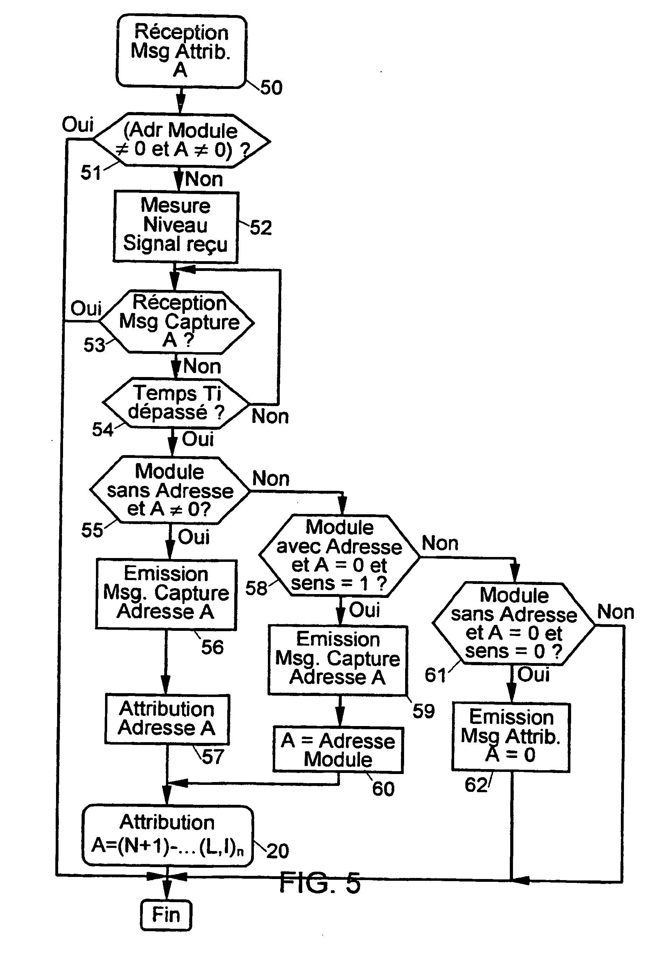

Tous les modules Mi qui reçoivent ce message exécutent la procédure 50 représentée sur la figure 5. Dans cette procédure, si le module Mi n'a pas encore d'adresse attribuée (étape 51), il mesure le niveau N de tension de la porteuse reçue et convertit ce niveau en temps Ti, sachant que le niveau de tension reçu décroît en fonction de la distance de transmission (étape 52). Ainsi le temps Ti peut être calculé par la formule suivante :

$$\text{Ti} = \frac{(\text{Nmax} - \text{N})}{\text{N}} \qquad\qquad (1)$$

où Nmax est le niveau maximum susceptible d'être reçu.

De cette manière, plus le niveau de tension du signal reçu est élevé, plus le temps Ti est court. Par ailleurs, si Ti est supérieur à une valeur Tmax, on considère que le module est trop éloigné et on abandonne la procédure.

Aux étapes 53 et 54, le module Mi se met en attente d'un message de capture de l'adresse A contenue dans le message d'attribution d'adresse. Si un tel message n'est pas reçu pendant le temps Ti, cela signifie que le module Mi est situé le plus proche de l'émetteur du message d'attribution d'adresse. Dans le cas contraire, la procédure 50 est terminée.

Si le module Mi est le plus proche de l'émetteur du message d'attribution d'adresse, il émet un message de capture d'adresse (étape 56) et s'attribue l'adresse A qu'il mémorise à un emplacement mémoire prévu à cet effet (étape 57). L'émission du message de capture à l'étape 56 a pour effet d'interrompre la procédure 50 en cours d'exécution par les autres modules en attente aux étapes 53 et 54.

Après l'étape 57, le module Mi exécute la procédure 20 décrite ci-avant avec l'adresse $A = "(N+1)\text{-}...(1,i)_n"$, c'est-à-dire dans le cas présent "2-10", pour attribuer une adresse au plus proche module non programmé dans le réseau, c'est-à-dire au module M1.

D'après la figure 1, la ligne principale 1 se divise en trois branches 1, 4, 5 après le module M1 qui est relié directement aux modules M2, M5 et M8 situés en aval dans le réseau par rapport à l'unité centrale UC.

Lorsque le module M1 va attribuer une adresse au module suivant en émettant l'adresse "3-10", c'est le module le plus proche, par exemple le module M2 qui va s'attribuer cette adresse. A l'itération suivante, le module M2 va attribuer l'adresse "4-10" au module le plus proche, à savoir le module M3.

Lorsque le module M4 ayant reçu l'adresse "5-10", situé à l'extrémité d'une branche du réseau va exécuter la procédure 20 avec l'adresse "6-10", aucun module ne va répondre au message d'attribution d'adresse émis à l'étape 27, et plus aucun module n'exécute de traitement.

Par conséquent, à la fin de cette première séquence d'itérations, seuls les modules M0 à M4 connectés sur une même branche du réseau possèdent une adresse.

Durant cette séquence, l'unité centrale UC reste à l'écoute des messages du réseau pour capter tous les messages de capture d'adresse et mémoriser toutes les adresses qui ont été attribuées.

A la fin de cette séquence, l'unité centrale UC émet un message de recherche de module sans adresse, qui peut être constitué par un message d'attribution d'adresse dont le champ "adresse" 34 est égal à une valeur prédéterminée, par exemple 0, le sens indiqué dans le message dans le champ 33 étant à 0 (vers les modules). Tous les modules qui reçoivent ce message déclenchent la procédure 50 représentée sur la figure 5 et se mettent en attente de la réception d'un message pendant le temps Ti (étapes 52 à 54).

Chaque module n'ayant pas encore d'adresse se met en attente d'un message de recherche de module avec adresse émis en direction de l'unité centrale, ce message pouvant être constitué par un message d'attribution d'adresse dont le champ "adresse" 34 est égal à 0, et le champ "sens" 33 égal à 1 pendant un temps Ti correspondant au niveau du signal reçu (étape 61). Si pendant ce temps aucun autre module n'a émis un tel message, il émet à l'étape 62 un message d'attribution d'adresse avec le "champ" adresse A égal à 0 et le champ "sens" égal à 1 (vers l'unité centrale). De cette manière, seul répond le module n'ayant pas d'adresse attribuée, situé le plus proche du module ou de l'unité centrale, émetteur du message d'attribution d'adresse dont le champ "adresse" est égal à 0.

Tous les modules Mi qui reçoivent ce message d'attribution d'adresse déclenchent à nouveau la procédure 50 (étapes 51 à 54) et le premier module sans adresse, à savoir M12 ou M14, recevant le message émet à son tour un message d'attribution d'adresse avec le champ "adresse" 34 à zéro (étapes 55, 58, 61 et 62). L'unité centrale UC et tous les modules avec adresse reçoivent ce message (étapes 51 à 54) et l'unité centrale qui est située le plus proche du module M12 ou M14 va émettre un message d'attribution d'adresse avec le champ "adresse" 34 égal à "1-20", sachant que l'adresse "1-10" a déjà été attribuée (étapes 58 à 60 et procédure 20).

De cette manière, à la fin de la seconde et troisième séquence d'itérations, les modules M12 à M14 des deux lignes principales 2, 3 vont recevoir respectivement les adresses "1-20", "2-20", "1-30" et "2-30".

A la quatrième séquence d'itérations, l'unité centrale émet à nouveau un message d'attribution d'adresse dont le champ "adresse" 34 est à zéro, et le module M5 le plus proche de l'unité centrale, n'ayant pas encore d'adresse va émettre à son tour un message d'attribution d'adresse dont le champ "adresse" est à zéro (étapes 51 à 55, 58, 61 et 62). Seul le module M1 possédant déjà une adresse et situé le plus proche en amont du module émetteur M5 répond à ce message en émettant un message de capture d'adresse avec A = 0 (étapes 51 à 55 et 58 à 60), et déclenche la procédure 20 d'attribution d'adresse en utilisant son adresse dont le numéro d'ordre 43 est incrémenté de 1, c'est-à-dire $A = "(N+1)-...(1,i)_n"$, soit dans l'exemple décrit "3-10".

D'après cette procédure, le module M1 émet tout d'abord un message d'interrogation sur l'adresse $A = "(N+1)-...(1,i+1)_n" = "3-11"$ (étape 21), et se met en attente d'une réponse (étape 22). Pendant ce temps tous les modules Mi qui reçoivent ce message d'interrogation, comparent l'adresse A reçue avec l'adresse qu'ils se sont attribuée. Cette adresse n'étant pas encore attribuée, aucun module ne répond (étape 22). Par conséquent, le module M1 passe à l'étape 25 consistant à interroger les modules pour savoir si l'adresse $A = "(N+1)-...(1,i)_n" = "3-10"$ a été attribuée. Le module M2 qui possède cette adresse émet un message indiquant que cette adresse est attribuée.

Ce message est reçu par le module M1 qui exécute alors les étapes 27, 28 destinées à créer une nouvelle intersection. Ainsi, à l'étape 27, le module M1 déclenche la modification des adresses des modules M2 à M4 de la branche pour remplacer chaque adresse $A = "(N)-...(1,i)_n"$ par $"(N)-...(1,i+1)_n"$, c'est-à-dire remplacer les adresses "3-10", "4-10" et "5-10" par "3-11", "4-11" et "5-11". A cet effet, il transmet au module M2 un message de modification d'adresse contenant la nouvelle adresse "3-11" du module M2. A la réception de ce message, le module M2 modifie son adresse avec la nouvelle adresse reçue et émet à destination du module suivant, à savoir M3, un message de modification d'adresse. Les modules M2 à M4 de la branche sont ainsi renumérotés jusqu'à l'extrémité de la branche.

En parallèle, l'unité centrale reçoit ces messages de modification d'adresse et met à son tour à jour la liste des adresses de module attribuées dans le réseau.

A l'étape 28, le module M1 détermine l'adresse à attribuer au module M5, compte tenu de la détection d'une nouvelle intersection, en lui ajoutant un niveau 45, 46, 47 supplémentaire, cette adresse étant égale à $"N-...(1,i+1)_n·(1,0)_{n+1}"$, c'est-à-dire "3-11·10".

Le module M1 émet ensuite un message d'attribution d'adresse contenant l'adresse ainsi déterminée (étape 30).

Le module M5 qui est le module le plus proche en aval du module M1 et qui ne possède pas encore d'adresse, s'attribue cette adresse (étapes 51 à 57) et déclenche la procédure 20 d'attribution d'adresse au module le plus proche suivant, c'est-à-dire le module M6.

A la fin de cette quatrième séquence d'itérations, tous les modules M5 à M7 de la branche 4 vont donc ainsi recevoir une adresse.

A la fin de cette séquence, l'unité centrale UC déclenche une nouvelle séquence d'itérations en émettant un message de recherche de module sans adresse, pour déterminer s'il existe encore des modules sans adresse. En exécutant les procédures décrites précédemment, seul le module M8 n'ayant pas encore d'adresse et situé le plus proche de l'unité centrale répond à ce message en émettant un message d'attribution d'adresse dont le champ "adresse" est à zéro (étapes 51 à 55, 58, 61 et 62). Seul le module M1 avec adresse le plus proche du module M8 prend en compte ce message en exécutant les étapes 51 à 55, 58 à 60, et cherche à attribuer l'adresse 3-10 au module M8 en déclenchant la procédure 20 avec cette adresse.

A l'étape 21, il émet un message d'interrogation contenant l'adresse 3-11. Comme cette adresse est déjà attribuée au module M2 (étape 22), lequel émet en réponse un message d'adresse attribuée, le module M1 détermine à l'étape 23 l'adresse à attribuer au module M8. Cette étape consiste à rechercher la valeur k telle que l'adresse N-... $(1,i+1)_n \cdot (k,0)$ est libre. Dans le présent exemple, il va donc émettre un message d'interrogation contenant l'adresse "3-11·10", ce qui déclenche une réponse du module M5 à qui cette adresse est déjà attribuée. Puis, il émet un message d'interrogation contenant l'adresse "3-11·20". Comme cette adresse n'est pas attribuée, aucun module ne répond et le module M1 en déduit que cette adresse est libre. Il émet donc un message d'attribution d'adresse contenant cette adresse (étape 30). Comme précédemment décrit, ce message déclenche l'attribution d'adresse aux modules M8 à M 10 qui vont recevoir successivement les adresses "3-11-20", "4-11·20" et "5-11·20".
A la fin de cette cinquième séquence d'itérations, seul le module M11 n'a pas encore d'adresse.

A la sixième séquence d'itérations, toujours déclenchée par l'unité centrale par l'émission d'un message d'attribution d'adresse dont le champ "adresse" est à zéro, le module M11 répond qu'il n'a pas encore d'adresse. Comme précédemment décrit, le module M8 qui est le plus proche module amont avec adresse déclenche la procédure 20 d'attribution d'adresse et détermine l'adresse à attribuer à ce module en émettant des messages d'interrogation d'adresse. Il va ainsi détecter la présence d'une intersection et créer cette intersection en renumérotant les modules en aval M9 et M10, lesquels vont ainsi recevoir les adresses "4-11-21" et "5-11-21". Puis le module M8 émet un message d'attribution d'adresse contenant l'adresse "4-11-21-10", cette adresse étant reçue et acceptée par le module M11 (étapes 51 à 57), lequel va tenter d'attribuer l'adresse "5-11·21·10" au module suivant. Si le module M11 est le dernier module de la branche de réseau à laquelle il est connecté, cette séquence se termine.

L'unité centrale déclenche une septième séquence pour rechercher s'il existe encore des modules sans adresse dans le réseau. Si tous les modules du réseau ont une adresse, aucun module ne va répondre au message d'attribution d'adresse émis par l'unité centrale, et la procédure d'attribution d'adresse selon l'invention se termine.

Pour pouvoir établir la relation entre les adresses attribuées et la position géographique des modules Mi, on peut prévoir que le message de capture d'adresse émis à l'étape 56 par chaque module qui s'attribue une adresse contienne un code d'identification du module, par exemple un numéro de série.

On peut également prévoir sur chaque module, un bouton de commande permettant de déclencher manuellement l'émission d'un message de recherche de module, en vue d'attribuer une adresse aux modules qui n'en ont pas encore. Si le module en question n'a pas encore d'adresse attribuée, il émet un message d'attribution d'adresse en direction de l'unité centrale (champ "adresse" 34 égal à 0 et champ "sens" 33 égal à 1), ce qui permet de rechercher le module amont le plus proche ayant une adresse attribuée (étapes 50 à 56, 58 à 60). Si ce module a déjà une adresse, il émet un message d'attribution d'adresse dont les champs "adresse" et "sens" sont égaux à 0, pour rechercher le module situé le plus proche en aval n'ayant pas encore d'adresse.

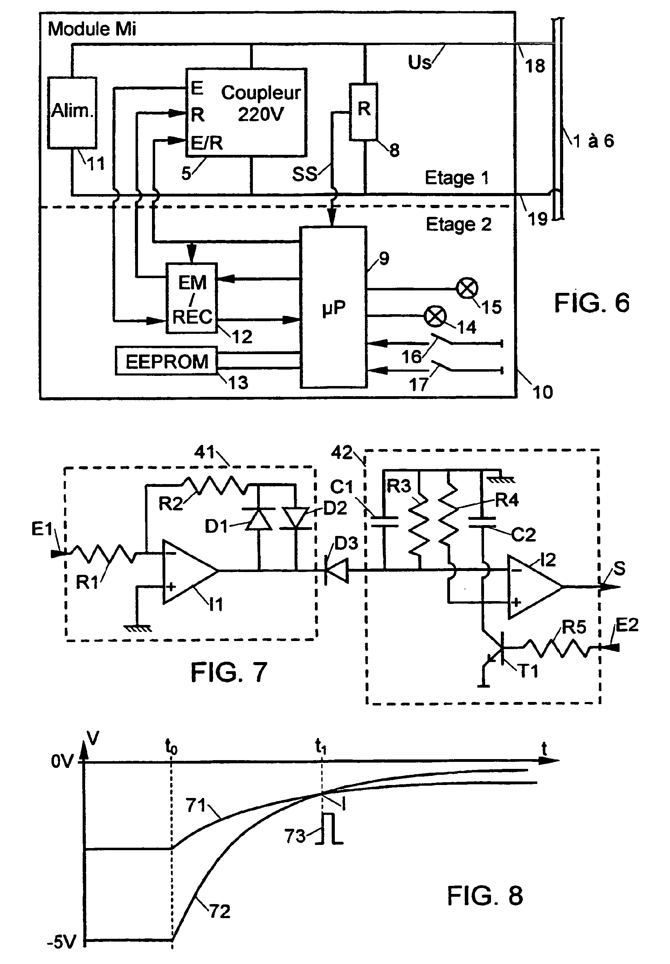

La figure 6 représente un exemple de module Mi dans lequel le procédé selon l'invention peut être mis en oeuvre, ce module étant conçu pour utiliser un réseau de distribution d'énergie électrique comme réseau de communication. Sur cette figure, le module Mi 10 comprend au moins deux étages, à savoir :

- un premier étage assurant l'alimentation du module 10, le couplage de celui-ci au réseau de distribution d'électricité, et la génération d'un signal de synchronisation à partir de la tension Us fournie par le réseau électrique, et

- un second étage organisé autour d'un processeur 9 (par exemple un microprocesseur) assurant le pilotage de l'ensemble du module et exécutant notamment les procédures 20 et 50 décrites précédemment.

Le premier étage comprend :

- un circuit d'alimentation 11 qui, à partir de la tension Us entre la phase 18 et le neutre 19, fournit les tensions d'alimentation nécessaires aux différents organes du module 10,

- un circuit de couplage 5 connecté entre la phase 18 et le neutre 19, conçu pour assurer l'échange d'informations entre le processeur 9 et le réseau électrique, et

- un circuit de synchronisation 8 également connecté entre la phase 18 et ne neutre 19, conçu pour engendrer un signal logique SS synchrone de la tension électrique Us fournie par le réseau électrique, ce signal logique SS étant appliqué sur une entrée du processeur 9.

Le circuit de couplage 5 peut être réalisé à l'aide d'un transformateur ou d'un circuit résonnant de type LC calé sur la fréquence de la porteuse de transmission des messages par courant porteur.

Le second étage, ou étage de commande, comprend, autour du processeur 9 :

- une mémoire non volatile 13 (par exemple de type EEPROM) permettant de sauvegarder des informations, notamment les informations liées à la configuration du module 10 et à son adresse, et

- un circuit d'émission / réception 12 conçu pour moduler les informations à émettre, fournies par le processeur 9, et envoyer le signal ainsi obtenu au circuit de couplage 5, et pour démoduler et amplifier les signaux d'information transmis par le circuit de couplage 5, et délivrer les informations ainsi obtenues au processeur 9.

Par ailleurs, le professeur 9 est connecté à deux voyants, un voyant rouge 14 de signalisation des défauts, et un voyant vert 15 pour la signalisation des états de fonctionnement. Il est également connecté à un bouton 16 de marche/arrêt, et un bouton 17 qui permet de déclencher l'émission d'un message d'attribution d'adresse dont le champ "adresse" 34 est à zéro, notamment lors de l'installation et du raccordement du module au réseau. Lorsque l'émission de ce message est déclenchée de cette manière, le processeur 9 va lire dans la mémoire 13 l'adresse qui est attribuée au module 10, cette adresse pouvant être nulle si aucune adresse n'a été préalablement attribuée au module.

Comme précédemment mentionné, le processeur 9 communique avec l'unité centrale UC et les autres modules Mi par messages transmis par courant porteur, ces messages étant transmis par exemple par modulation de phase d'une fréquence de 132 kHz, via le réseau de distribution électrique.

Les étapes 52 à 54 peuvent être mises en oeuvre par un circuit de temporisation externe au processeur 9, par exemple intégré dans le circuit d'émission /réception 12.

Tel que représenté sur la figure 7, ce circuit de temporisation comprend un premier étage 41 de détection de la réception d'un message, et un second étage 42 de temporisation proprement dit, ces deux étages étant reliés par une diode D3 montée en inverse.

Le premier étage 41 est en fait conçu pour détecter la partie négative de l'enveloppe de la porteuse modulée reçue. Il comporte à cet effet une entrée E1 recevant le signal modulé reçu par le réseau, laquelle est connectée par l'intermédiaire d'une résistance R1 à l'entrée inverseuse d'un amplificateur opérationnel I1 dont l'entrée non inverseuse et reliée à la masse. En parallèle entre l'entrée inverseuse et la sortie de l'amplificateur I1, ce circuit comprend une résistance R2 reliée en série à deux diodes D1, D2 montées tête-bêche, le point de jonction entre la sortie du comparateur I1 et les diodes D1, D2 étant relié à la diode D3.

Le second étage 42 comporte un premier circuit de décharge de condensateur comprenant un condensateur C1 et une résistance R3, montés en parallèle entre la diode D3 et la masse, le point de jonction entre la diode D3, le condensateur C1 et la résistance R3 étant relié à l'entrée inverseuse d'un comparateur I2. Cet étage comporte également un second circuit de décharge de condensateur comprenant un condensateur C2 et une résistance R4, montés en parallèle entre la masse du circuit et l'entrée non inverseuse du comparateur I2, cette dernière étant reliée à l'émetteur d'un transistor T1, par exemple de type npn, dont collecteur est relié à une tension de référence, par exemple la borne d'alimentation négative du circuit (-5 volts). Le circuit de temporisation comporte en outre une sortie S constituée par la sortie du comparateur I2, et une entrée de commande E2 reliée à la base du transistor T1 par l'intermédiaire d'une résistance R5, la sortie S et l'entrée E2 étant reliées au processeur 9.

Le premier étage fournit en sortie, un signal de tension nulle lorsqu'aucun message n'est en cours de réception et un signal sensiblement à une tension constante correspondant au niveau de l'enveloppe négative de la porteuse modulée, reçue par le module 10. Il en résulte que pendant la réception d'un message, le condensateur C1 se charge à la tension ainsi mesurée. En parallèle, le condensateur C2 est chargé à la tension maximum négative délivrée par l'alimentation du circuit, tant que le transistor T1 conduit, c'est-à-dire tant qu'une tension de commande est appliquée à l'entrée E2 par le processeur 9.

Bien entendu, ce circuit peut être conçu pour effectuer une détection d'enveloppe positive de la porteuse de transmission. Dans ce cas, le collecteur du transistor T1 est relié à la borne d'alimentation positive du circuit et l'émetteur du transistor au comparateur I2.

La figure 7 permet d'illustrer le fonctionnement du circuit de temporisation montré sur la figure 6. Sur cette figure, on a représenté deux courbes 71, 72 représentant l'évolution en fonction du temps des tensions aux entrées du comparateur 12, la courbe 71 correspondant à la tension aux bornes du condensateur C1 et la courbe 72, la tension aux bornes du condensateur C2.

Ces deux courbes présentent tout d'abord un niveau constant correspondant pour la courbe 71 à la période de réception d'un message, et pour la courbe 72 à la période durant laquelle le condensateur C2 reste chargé, le transistor T1 étant conducteur. A l'instant $t_0$, la transmission du message en cours de réception se termine, et la tension en sortie de l'étage 41 passe à 0. Le condensateur C1 commence donc à se décharger dans la résistance R3.

Dès que le processeur 9 détecte la fin de l'arrivée d'un message (message d'attribution d'adresse), à $t_0$ sur la figure 7, il met à zéro la tension de commande appliquée à l'entrée E2, ce qui a pour effet de déclencher la décharge du condensateur C2. Lorsque les deux courbes 71 et 72 se rencontrent au point I correspondant à l'instant $t_1$, les tensions appliquées aux bornes d'entrée du comparateur I2 sont égales, et donc le comparateur délivre en sortie S une impulsion 73 qui est reçue par le processeur 9. De cette manière, on a transformé le niveau de tension reçu en E1 en une durée d'attente que l'on compare à la durée correspondant au niveau de tension maximum.

L'avantage obtenu par ce circuit réside dans le fait que l'on effectue une comparaison de deux courbes exponentielles, de sorte que plus les signaux reçus sont faibles, plus l'écart entre les deux courbes est dilaté.

Il est à noter que si un message est reçu avant l'instant $t_1$, le signal en sortie de l'étage 41 repasse à un niveau inférieur et le condensateur C1 se recharge, ce qui a pour effet d'avancer l'instant $t_1$ où les deux courbes se croisent. Il faut donc qu'à la réception de l'impulsion 73, le processeur 9 regarde si un message est ou non en cours de réception. Si aucun message n'est en cours de réception, le processeur 9 considère que le temps $Ti = t_1 - t_0$ s'est écoulé, et qu'il est donc le premier à avoir reçu le message qui a déclenché la temporisation Ti. Dans ce cas, il exécute l'étape 55. Dans le cas contraire, l'exécution de la procédure 50 se termine.

## Revendications

**1.** Procédé pour l'attribution automatique d'adresses à une multiplicité de modules interconnectés par un réseau (1 à 6) à topologie arborescente relié à une unité centrale (UC), l'adresse de chaque module (M1 à M 15) étant déterminée à partir de l'adresse du module situé immédiatement en amont dans le réseau par rapport à l'unité centrale et ayant déjà une adresse attribuée, l'adresse ainsi déterminée étant émise sur le réseau par le module amont dans un message d'attribution d'adresse,
**caractérisé en ce qu'**il comprend une phase de recherche automatique du module n'ayant pas d'adresse attribuée, situé le plus proche en aval dans le réseau, d'un module ayant déjà une adresse, cette phase comprenant pour chaque module aval n'ayant pas d'adresse attribuée :

- la réception (50) par le module aval du message d'attribution d'adresse et le déclenchement (52) par celui-ci d'une temporisation dont la durée est d'autant plus grande que le niveau de réception du message reçu est faible,
- si à la fin (54) de la temporisation, le module aval ne détecte (53) dans le réseau aucun message de capture d'adresse, l'émission (56) par celui-ci d'un message de capture d'adresse contenant l'adresse à attribuer, la mémorisation (57) par celui-ci de l'adresse reçue en tant qu'adresse de module, la détermination (20 à 29) par celui-ci de l'adresse du module n'ayant pas d'adresse attribuée, situé le plus proche en aval dans le réseau, et le déclenchement (30) par celui-ci de la phase de recherche automatique du module n'ayant pas d'adresse attribuée, situé le plus proche en aval dans le réseau.

**2.** Procédé selon la revendication 1,
**caractérisé en ce que** l'adresse (43, 44) d'un module (M1 à M15) est déterminée en fonction de celle du module situé le plus proche en amont dans le réseau et de la présence éventuelle de modules possédant déjà une adresse et situés le plus proche en aval dans le réseau du module amont, de manière à ce que l'adresse de chaque module indique à elle seule la position du module par rapport aux autres modules dans le réseau.

**3.** Procédé selon la revendication 1 ou 2,
**caractérisé en ce que** l'adresse (43, 44) d'un module donné (M1 à M 15) comprend un numéro d'ordre (43) obtenu en numérotant successivement tous les modules situés sur un chemin reliant directement le module donné à l'unité centrale (UC), en commençant par un pour le premier module (M1) relié sur le chemin à unité centrale, ainsi qu'une adresse de liaison (44) permettant de déterminer les différents tronçons de ligne constituant le chemin reliant le module à l'unité centrale.

**4.** Procédé selon l'une des revendications précédentes,
**caractérisé en ce qu'**il comprend en outre une phase préalable de recherche automatique d'un module ayant une adresse, situé le plus proche en amont dans le réseau d'un module n'ayant pas d'adresse, ce module émettant sur le réseau un message de recherche de module ayant une adresse, cette phase comprenant pour chaque module ayant déjà une adresse :

- la réception (50) par le module du message de recherche de module ayant une adresse et le déclenchement (52) par celui-ci d'une temporisation dont la durée est d'autant plus grande que le niveau de réception du message reçu est faible,
- si à la fin (54) de la temporisation, le module ne détecte (53) sur le réseau aucun message de capture d'adresse, l'émission (59) par celui-ci d'un message de capture d'adresse, la détermination (60, 20 à 29) par celui-ci de l'adresse du module n'ayant pas d'adresse, situé immédiatement en aval dans le réseau , et le déclenchement (30) par celui-ci de la phase de recherche automatique du module n'ayant pas d'adresse attribuée, situé le plus proche en aval dans le réseau.

**5.** Procédé selon la revendication 4,
**caractérisé en ce qu'**il comprend en outre une phase préalable de recherche automatique d'un module n'ayant pas d'adresse attribuée, situé immédiatement en aval d'un module ayant déjà une adresse attribuée, cette phase étant déclenchée par l'unité centrale (UC) ou par un module (M1 à M15) ayant déjà une adresse attribuée, qui émet sur le réseau un message de recherche de module sans adresse, cette phase comprenant pour chaque module n'ayant pas d'adresse :

- la réception (50) par le module du message de recherche de module sans adresse et le déclenchement (52) par celui-ci d'une temporisation dont la durée est d'autant plus grande que le niveau de réception du message reçu est faible,
- si à la fin (54) de la temporisation, le module ne détecte (53) sur le réseau aucun message de recherche de module, l'émission (62) par celui-ci d'un message de recherche de module en direction de l'unité centrale, ce qui a pour effet de déclencher la phase de recherche automatique d'un module ayant une adresse, situé le plus proche en amont dans le réseau d'un module n'ayant pas d'adresse.

**6.** Procédé selon la revendication 4 ou 5,
**caractérisé en ce qu'**il comprend en outre la répétition par les autres modules du réseau des messages de recherche de modules sans adresse, de manière à ce qu'ils puissent être transmis jusqu'aux extrémités des branches du réseau.

**7.** Procédé selon l'une des revendications précédentes,
**caractérisé en ce qu'**il comprend en outre l'émission par l'unité centrale (UC) d'un message d'initialisation des adresses mémorisées par au moins une partie des modules du réseau.

**8.** Procédé selon l'une des revendications précédentes,
**caractérisé en ce qu'**il comprend la transmission des messages de capture d'adresse jusqu'à l'unité centrale (UC) qui mémorise les adresses attribuées contenues dans ces messages.

**9.** Procédé selon l'une des revendications précédentes,
**caractérisé en ce que** le message de capture d'adresse émis (56) par chaque module qui s'attribue une adresse contient un code d'identification du module.

**10.** Réseau (1 à 6) à topologie arborescente,

- comprenant une unité centrale (UC) et une pluralité de modules (M1 à M15,10) interconnectés par ledit réseau (1 à 6), chaque module comprenant un processeur (9), des moyens de mémorisation (13) et des moyens (12) pour émettre et recevoir des messages sur le réseau par modulation d'une porteuse,
- ledit réseau comprenant des moyens adaptés à déterminer l'adresse de chaque module (M1 à M15) à partir de l'adresse du module situé immédiatement en amont dans le réseau par rapport à l'unité centrale et ayant déjà une adresse attribuée,
- ledit module amont étant adapté à émettre l'adresse ainsi déterminée sur le réseau dans un message d'attribution d'adresse, ledit réseau étant **caractérisé en ce que**,
- ledit réseau comprend des moyens adaptés à exécuter une phase de recherche automatique du module n'ayant pas d'adresse attribuée, situé le plus proche en aval dans le réseau, d'un module ayant déjà une adresse
- chaque module aval n' ayant pas d'adresse attribuée étant adapté à

-recevoir le message d'attribution d'adresse et déclencher (52) une temporisation dont la durée est d'autant plus grande que le niveau de réception du message reçu est faible,
--si à la fin (54) de la temporisation, le module aval ne détecte (53) dans le réseau aucun message de capture d'adresse, émettre (56) un message de capture d'adresse contenant l'adresse à attribuer, mémoriser (57) l'adresse reçue en tant qu'adresse de module, déterminer (20 à 29) l'adresse du module n'ayant pas d'adresse attribuée, situé le plus proche en aval dans le réseau, et déclencher (30) la phase de recherche automatique du module n'ayant pas d'adresse attribuée, situé le plus proche en aval dans le réseau.

**11.** Réseau selon la revendication 10,
**caractérisé en ce que** le réseau (1 à 6) est constitué par un réseau électrique assurant l'alimentation des modules (10) en énergie, les modules communiquant entre eux et avec l'unité centrale (UC) par courant porteur bidirectionnel, modulé en phase.

**12.** Réseau selon la revendication 10 ou 11,
**caractérisé en ce que** chaque module (10) comprend un circuit de temporisation (41, 42) commandé par le processeur (9), ce circuit comprenant un étage (41) de détection de la présence d'un message en cours de réception, et un étage (42) de temporisation comprenant un premier circuit (R3, C1) de décharge d'un premier condensateur (C1) qui est chargé avec le niveau du signal de réception du message, et un second circuit (R4, C2) de décharge d'un second condensateur (C2) qui est chargé à une tension de référence, les tensions respectives aux bornes des deux condensateurs étant comparées par un comparateur (I2) délivrant un signal (73) de fin de temporisation lorsque les tensions des deux condensateurs sont identiques, le circuit de temporisation comprenant en outre des moyens (T1) permettant au processeur (9) de déclencher la décharge du second condensateur lorsque le premier condensateur commence à se décharger à la fin de la réception d'un message.

**Claims**

**1.** Method for automatically allocating addresses to a multiplicity of modules interconnected by a network (1 to 6) with an arborescent topology connected to a central unit (UC), the address of each module (M1 to M6) being determined on the basis of the address of the module situated immediately upstream inside the network with respect to the central unit and already having an allocated address, the address determined being transmitted onto the network by the upstream module in an address allocation message, **characterized in that** it comprises a phase for the automatic search for a module not having any allocated address situated closest downstream in the network to a module already having an address, this phase including for each downstream module not having any allocated address:

- the receiving (50) by the downstream module of the address allocation message and the triggering (52) by the latter of a delay time whose period is that much greater when the level of reception of the message is low,
- if at the end (54) of the delay time the downstream module does not detect (53) in the network any address capture message, the emission (56) by the latter of an address capture message containing the address to be allocated, the storing (57) by the latter of the address received as a module address, the determination (20 to 29) by the latter of the address of the module not having any allocated address situated the nearest downstream in the network and the triggering (30) by the latter of the phase for the automatic search for the module not having any allocated address situated closest downstream in the network.

**2.** Method according to claim 1, wherein the address (43, 44) of a module (M1 to M15) is determined according to that of the module situated closest upstream in the network and the possible presence of modules already having an address and situated closest downstream in the network to the upstream module so that the address of each module indicates by itself the position of the module with respect to the other modules in the network.

**3.** Method according to claim 1 or 2, wherein the address (43, 44) of a given module (M1 to M15) comprises an order number (43) obtained by successively numbering all the modules situated on a path directly connecting the given module to the central unit (UC) by commencing by one for the first module (M1) connected on the path to the central unit, as well as a linking address (44) making it possible to determine the various line sections constituting the path connecting the module to the central unit.

**4.** Method according to any of the preceeding claims, which further comprises a prior phase for the automatic search for a module having an address situated closest upstream in the network to a module not having any address, this module transmitting on the network a message seeking a module having an address, this phase including for each module already having an address:

- a step of receiving (50) by the module the message seeking a module having an address and a step of triggering (52) by the latter a delay time whose period is that much greater when the level of reception of the message received is low,
- if at the end (53) of the delay time the module does not detect (53) on the network any address capture message, a step of emitting (59) by the latter an address capture message, a step of determining (60, 20 to 29) by the latter the address of the module not having any address situated immediately downstream in the network, and a step of triggering (30) by the latter the phase for the automatic search for the module not having any allocated address situated closest downstream in the network.

5. Method according to claim 4, wherein it further comprises a prior phase for automatically seeking a module not having any allocated address situated immediately downstream of a module already having an allocated address, this phase being triggered by the central unit (UC) or by a module (M1 to M15) already having an allocated address, which transmits on the network a message seeking a module with no address, this phase including for each module not having any address:

- a step of receiving (59) by the module the message seeking a module with no address and a step of triggering (52) by the latter a delay time whose period is that much greater when the level of reception of the message received is weak,
- if at the end (54) of the delay time the module (53) does not detect on the network any module search message, a step of emitting (62) by the latter a module search message in the direction of the central unit, which has the effect of triggering the phase for the automatic search for a module having an address situated closest upstream in the network to a module not having any address.

6. Method according to claim 4 or 5, which further comprises the repetition by the other modules of the network of the messages for seeking modules with no address so that they are able to be transmitted to the extremities the branches of said network.

7. Method according to any of the preceding claims, which further comprises the emission by the central unit (UC) of a message for initialising the addresses stored by at least one portion of the modules of the network.

8. Method according to any of the preceding claims, which comprises the transmission of address capture messages to the central unit which stores the allocated addresses contained in these messages.

9. Method according to any of the preceding claims, wherein the address capture message (56) emitted by each module which allocates an address to itself contains an identification code of the module.

10. Network (1 to 6) of arborescent topology,

- comprising a central unit (UC) and a plurality of modules (M1 to M15, 10) interconnected by said network (1 to 6), each module comprising a processor (9), storage means (13), and means (12) to transmit and receive messages on the network via the modulation of a carrier wave,
- said network including means adapted to determine the address of each module (M1 to M15) on the basis of the address of the module situated immediately upstream inside the network relative to the central unit and already having an allocated address,
- said upstream module being adapted to transmit the address as determined in this way onto the network in an address allocation message, said network being **characterized in that**:
- said network includes means adapted to execute a phase for the automatic search for a module not having any allocated address situated closest downstream in the network to a module already having an address,
- each downstream module not having any allocated address being adapted to:

-- receive the address allocation message and thereby trigger (52) a delay time whose period is that much greater when the level of reception of the message is low,
-- if at the end (54) of the delay time the downstream module does not detect (53) in the network any address capture message, transmitting (56) thereby of an address capture message containing the address to be allocated, storing (57) thereby of the address received as a module address, determination (20 to 29) thereby of the address of the module not having any allocated address situated the nearest downstream in the network, and triggering (30) thereby of the phase for the automatic search for the module not having any allocated address situated closest downstream in the network.

11. Network according to claim 10, **characterized in that** the network (1 to 6) is constituted by an electric network ensuring the feeding of modules (10) with energy, the modules communicating with one another and with the central unit (UC) by a phase-modulated bidirectional carrier current.

**12.** Network according to claim 10 or 11, wherein each module (10) comprises a delay line (41, 42) controlled by the processor (9), this line including a stage (41) for detecting the presence of a message in the course of being received, and a delay time stage (42) including a first circuit (R3, C1) for discharging a first capacitor (C1) which is charged with the level of the receiving signal of the message, and a second circuit (R4, C2) for discharging a second capacitor (C2) which is charged with a reference voltage, the two capacitors having respective voltages which are compared by a comparator (I2) delivering an end of delay time signal (73) when the two capacitors have identical voltages, the delay time circuit also comprising means (T1) permitting the processor (9) to trigger the discharge of the second capacitor when the first capacitor starts to discharge at the end of the receiving of a message

**Patentansprüche**

**1.** Verfahren zur automatischen Zuordnung von Adressen zu einer Vielzahl von Modulen, die durch ein Netz (1 bis 6) mit baumförmiger Topologie untereinander verbunden sind, das an eine Zentraleinheit (UC: unite centrale) angeschlossen ist, wobei die Adresse jedes Moduls (M1 bis M15) ausgehend von der Adresse des Moduls festgelegt wird, das unmittelbar netzaufwärts in Bezug auf die Zentraleinheit liegt und bereits eine zugeordnete Adresse hat, wobei die so festgelegte Adresse vom vorgelagerten Modul in einer Adresszuordnungsmitteilung auf dem Netz gesendet wird,
**dadurch gekennzeichnet, dass** es eine Phase zur automatischen Suche des keine zugeordnete Adresse habenden Moduls umfasst, das netzabwärts einem Modul am nächsten liegt, das bereits eine Adresse hat, wobei diese Phase für jedes nachgelagerte Modul, das keine zugeordnete Adresse hat, umfasst:

- den Empfang (50), durch das nachgelagerte Modul, der Adresszuordnungsmitteilung und die Auslösung (52), durch dasselbe, einer Verzögerung, deren Dauer je länger ist, desto schwächer der Empfangspegel der empfangenen Mitteilung ist,
- falls am Ende (54) der Verzögerung das nachgelagerte Modul keine Adresserfassungsmitteilung im Netz detektiert (53), das Senden (56), durch dasselbe, einer Adresserfassungsmitteilung, welche die zuzuordnende Adresse enthält, die Speicherung (57), durch dasselbe, der empfangenen Adresse als Moduladresse, die Festlegung (20 bis 29), durch dasselbe, der Adresse des keine zugeordnete Adresse habenden Moduls, das netzabwärts am nächsten liegt, und die Auslösung (30), durch dasselbe, der Phase zur automatischen Suche des keine zugeordnete Adresse habenden Moduls, das netzabwärts am nächsten liegt.

**2.** Verfahren nach Anspruch 1,
**dadurch gekennzeichnet, dass** die Adresse (43, 44) eines Moduls (M1 bis M15) festgelegt wird in Abhängigkeit von jener des Moduls, das netzaufwärts am nächsten liegt, und vom möglichen Vorhandensein von Modulen, die bereits eine Adresse besitzen und netzabwärts dem vorgelagerten Modul am nächsten liegen, so dass die Adresse jedes Moduls allein die Position des Moduls in Bezug auf die anderen Module im Netz angibt.

**3.** Verfahren nach Anspruch 1 oder 2,
**dadurch gekennzeichnet, dass** die Adresse (43, 44) eines gegebenen Moduls (M1 bis M15) eine Ordnungsnummer (43) umfasst, die erhalten wird durch sukzessives Nummerieren aller Module, die auf einem Weg liegen, der das gegebene Modul direkt mit der Zentraleinheit (UC) verbindet, wobei angefangen wird mit eins für das erste Modul (M1), das auf dem Weg mit der Zentraleinheit verbunden ist, wie auch eine Verbindungsadresse (44), die es ermöglicht, die verschiedenen Leitungsabschnitte zu bestimmen, die den Weg bilden, der das Modul mit der Zentraleinheit verbindet.

**4.** Verfahren nach einem der vorstehenden Ansprüche,
**dadurch gekennzeichnet, dass** es weiterhin eine vorhergehende Phase zur automatischen Suche eines eine Adresse habenden Moduls umfasst, das netzaufwärts einem Modul am nächsten liegt, das keine Adresse hat, wobei dieses Modul auf dem Netz eine Mittelung zur Suche eines Moduls sendet, das eine Adresse hat, wobei diese Phase für jedes Modul, das bereits eine Adresse hat, umfasst:

- den Empfang (50), durch das Modul, der Mitteilung zur Suche eines Moduls, das eine Adresse hat, und die Auslösung (52), durch dasselbe, einer Verzögerung, deren Dauer je länger ist, desto schwächer der Empfangspegel der empfangenen Mitteilung ist,
- falls am Ende (54) der Verzögerung das Modul keine Adresserfassungsmitteilung auf dem Netz detektiert (53), das Senden (59), durch dasselbe, einer Adresserfassungsmitteilung, die Festlegung (60, 20 bis 29), durch dasselbe, der Adresse des keine Adresse habenden Moduls, das unmittelbar netzabwärts liegt, und die Auslösung (30), durch dasselbe, der Phase zur automatischen Suche des keine zugeordnete Adresse habenden Moduls, das netzabwärts am nächsten liegt.

5. Verfahren nach Anspruch 4,
**dadurch gekennzeichnet, dass** es weiterhin eine vorhergehende Phase zur automatischen Suche eines keine zugeordnete Adresse habenden Moduls umfasst, das unmittelbar abwärts von einem Modul liegt, das bereits eine zugeordnete Adresse hat, wobei diese Phase ausgelöst wird von der Zentraleinheit (UC) oder von einem bereits eine zugeordnete Adresse habenden Modul (M1 bis M15), die bzw. das auf dem Netz eine Mitteilung zur Suche eines adresslosen Moduls sendet, wobei diese Phase für jedes Modul, das keine Adresse hat, umfasst:

- den Empfang (50), durch das Modul, der Mitteilung zur Suche eines adresslosen Moduls und die Auslösung (52), durch dasselbe, einer Verzögerung, deren Dauer je länger ist, desto schwächer der Empfangspegel der empfangenen Mitteilung ist,
- falls am Ende (54) der Verzögerung das Modul keine Modulsuchmitteilung auf dem Netz detektiert (53), das Senden (62), durch dasselbe, einer Modulsuchmitteilung in Richtung der Zentraleinheit, was bewirkt, dass die Phase zur automatischen Suche eines eine Adresse habenden Moduls ausgelöst wird, das netzaufwärts einem Modul am nächsten liegt, das keine Adresse hat.

6. Verfahren nach Anspruch 4 oder 5,
**dadurch gekennzeichnet, dass** es weiterhin die Wiederholung, durch die anderen Module des Netzes, der Mitteilungen zur Suche adressloser Module umfasst, so dass diese bis an die Enden der Zweige des Netzes übertragen werden können.

7. Verfahren nach einem der vorstehenden Ansprüche,
**dadurch gekennzeichnet, dass** es weiterhin das Senden, durch die Zentraleinheit (UC), einer Mitteilung zur Initialisierung der von zumindest einem Teil der Module des Netzes gespeicherten Adressen umfasst.

8. Verfahren nach einem der vorstehenden Ansprüche,
**dadurch gekennzeichnet, dass** es die Übertragung der Adresserfassungsmitteilungen bis zur Zentraleinheit (UC) umfasst, welche die zugeordneten Adressen speichert, die in diesen Mitteilungen enthalten sind.

9. Verfahren nach einem der vorstehenden Ansprüche,
**dadurch gekennzeichnet, dass** die Adresserfassungsmitteilung, gesendet (56) von jedem Modul, das sich eine Adresse zuordnet, einen Identifikationscode des Moduls enthält.

10. Netz (1 bis 6) mit baumförmiger Topologie,

- umfassend eine Zentraleinheit (UC: unite centrale) und eine Mehrzahl von Modulen (M1 bis M15, 10), die durch das Netz (1 bis 6) untereinander verbunden sind, wobei jedes Modul einen Prozessor (9), Speichermittel (13) und Mittel (12) zum Senden und Empfangen von Mitteilungen auf dem Netz durch Modulation eines Trägers umfasst,
- wobei das Netz Mittel umfasst, die angepasst sind, um die Adresse jedes Moduls (M1 bis M15) ausgehend von der Adresse des Moduls festzulegen, das unmittelbar netzaufwärts in Bezug auf die Zentraleinheit liegt und bereits eine zugeordnete Adresse hat,
- wobei das vorgelagerte Modul angepasst ist, um die so festgelegte Adresse auf dem Netz in einer Adresszuordnungsmitteilung zu senden, wobei das Netz **dadurch gekennzeichnet ist, dass**
- das Netz Mittel umfasst, die angepasst sind, um eine Phase zur automatischen Suche des keine zugeordnete Adresse habenden Moduls auszuführen, das netzabwärts einem Modul am nächsten liegt, das bereits eine Adresse hat,
- wobei jedes nachgelagerte Modul, das keine zugeordnete Adresse hat, angepasst ist zum

-- Empfangen der Adresszuordnungsmitteilung und Auslösen (52), durch dasselbe, einer Verzögerung, deren Dauer je länger ist, desto schwächer der Empfangspegel der empfangenen Mitteilung ist,
-- falls am Ende (54) der Verzögerung das nachgelagerte Modul keine Adresserfassungsmitteilung im Netz detektiert (53), Senden (56), durch dasselbe, einer Adresserfassungsmitteilung, welche die zuzuordnende Adresse enthält, Speichern (57), durch dasselbe, der empfangenen Adresse als Moduladresse, Festlegen (20 bis 29), durch dasselbe, der Adresse des keine zugeordnete Adresse habenden Moduls, das netzabwärts am nächsten liegt, und Auslösen (30), durch dasselbe, der Phase zur automatischen Suche des keine zugeordnete Adresse habenden Moduls, das netzabwärts am nächsten liegt.

**11.** Netz nach Anspruch 10,
**dadurch gekennzeichnet, dass** das Netz (1 bis 6) durch ein elektrisches Netz gebildet wird, das die Versorgung der Module (10) mit Energie gewährleistet, wobei die Module untereinander und mit der Zentraleinheit (UC) durch phasenmodulierten, bidirektionalen Trägerstrom kommunizieren.

**12.** Netz nach Anspruch 10 oder 11,
**dadurch gekennzeichnet, dass** jedes Modul (10) eine vom Prozessor (9) gesteuerte Verzögerungsschaltung (41, 42) umfasst, wobei diese Schaltung eine Stufe (41) zur Detektion des Vorhandenseins einer Mitteilung, die gerade empfangen wird, und eine Stufe (42) zur Verzögerung umfasst, die einen ersten Schaltkreis (R3, C1) zur Entladung eines ersten Kondensators (C1), der mit dem Pegel des Empfangssignals der Mitteilung geladen ist, und einen zweiten Schaltkreis (R4, C2) zur Entladung eines zweiten Kondensators (C2) umfasst, der auf eine Bezugsspannung geladen ist, wobei die jeweiligen Spannungen an den Anschlüssen der beiden Kondensatoren von einem Komparator (I2) verglichen werden, der ein Signal (73) zur Verzögerungsbeendigung liefert, wenn die Spannungen der beiden Kondensatoren identisch sind, wobei die Verzögerungsschaltung weiterhin Mittel (T1) umfasst, die es dem Prozessor (9) ermöglichen, die Entladung des zweiten Kondensators auszulösen, wenn der erste Kondensator am Ende des Empfangs einer Mitteilung beginnt, sich zu entladen.

**FIG. 1**

M13 — 2-20

1-20 — M12

2

4-11·10 — M6 — M7

3-11·10 — M5 — 5-11·20

4

1-10 — M0 — 2-10

3-11 — M2 — 4-11 — M3 — 5-11 — M4

UC — M0 — M1

1

M14

1-30 — 3

M15

2-30

5

3-11·20 — M8 — 4-11·21·10 — M11

6

4-11·21 — M9

5-11·21 — M10

**FIG. 4**

Attribution Adresse A = N-...(l,i)$_n$ — 20

Interroger A = N-...(l,i+1)$_n$ — 21

A attribuée ? — 22 — Non

Oui

Chercher k / N-...(l,i+1)$_n$·(k,0)$_{n+1}$ libre — 23

A = N-...(l,i+1)$_n$·(k,0) — 24

Interroger A = N-...(l,i)$_n$ — 25

A attribuée ? — 26 — Non

Oui

Création Intersection — 27

A = N-...(l,i+1)$_n$·(1,0)$_{n+1}$ — 28

A = N-...(l,i)$_n$ — 29

Emission Msg Attrib. Adr = A — 30

Fin

**FIG. 2**

N° — 43

45 46 47

L I · L I · L I

44

**FIG. 3**

| N° Emetteur | Sens | Adresse Module | Consignes | CRC |
|---|---|---|---|---|
| 32 | 33 | 34 | 35 | 36 |

16

```
          ┌──────────────┐
          │  Réception   │
          │  Msg Attrib. │
          │      A       │
          └──────┬───────┘ ╲50
                 │
                 ▼
   Oui  ╱───────────────╲
  ◄─────┤ (Adr Module   │
        │ ≠ 0 et A ≠ 0) ?│
   51─╱ ╲───────┬───────╱
              │ Non
              ▼
       ┌──────────────┐
       │   Mesure     │
       │   Niveau     │ ╲52
       │ Signal reçu  │
       └──────┬───────┘
              │        ◄──────────┐
              ▼                   │
   Oui  ╱──────────╲              │
  ◄─────┤ Réception │             │
        │Msg Capture│             │
   53─╱ ╲    A ?    ╱             │
              │ Non               │
              ▼                   │
        ╱──────────╲     Non      │
        │ Temps Ti ├──────────────┘
        │ dépassé ?│
   54─╱ ╲─────┬────╱
              │ Oui
              ▼
        ╱──────────╲    Non
        │  Module  ├─────────────┐
        │sans Adresse│           │
        │ et A ≠ 0? │            ▼
   55─╱ ╲─────┬────╱      ╱──────────╲    Non
              │ Oui       │  Module  ├──────────┐
              ▼           │avec Adresse│        │
       ┌──────────────┐   │ et A = 0 et│        ▼
       │  Emission    │ 58╱╲ sens = 1 ?│  ╱──────────╲   Non
       │ Msg. Capture │       └───┬────╱  │  Module  ├──────┐
       │  Adresse A   │           │ Oui   │sans Adresse│    │
       └──────┬───────┘           ▼       │ et A = 0 et│    │
           ╲56              ┌──────────┐  │ sens = 0 ? │    │
              │             │ Emission │61╱╲─────┬─────╱    │
              ▼             │Msg. Capture│       │ Oui       │
       ┌──────────────┐     │ Adresse A │        ▼          │
       │  Attribution │     └────┬─────┘  ┌──────────┐      │
       │  Adresse A   │       ╲59 │        │ Emission │      │
       └──────┬───────┘          ▼         │Msg Attrib.│     │
           ╲57              ┌──────────┐   │  A = 0   │      │
              │             │A = Adresse│   └────┬─────┘      │
              │             │  Module  │    62╱  │           │
              │             └────┬─────┘         │           │
              ▼   ◄───────────────┘              │           │
       ┌──────────────┐                          │           │
       │  Attribution │                          │           │
       │A=(N+1)-…(L,I)n│ ╲20                      │           │
       └──────┬───────┘                          │           │
              │                                  │           │
              ▼  ◄─────────   FIG. 5              │           │
           ┌──────┐                               │           │
           │ Fin  │ ◄──────────────────────────────────────────┘
           └──────┘
```

$$A = (N+1) - \ldots (L,I)_n$$

**FIG. 5**

**Module Mi**

Alim. 11

E
R
E/R   Coupleur 220V
5

R
8

SS   Us   18

Etage 1   1 à 6   19

Etage 2

EM / REC   9   μP   15   14

12   16   17   10

EEPROM   13

**FIG. 6**

41   42

R2   C1   R3   R4

D1   D2   C2

E1   D3   I2   S

R1   I1   E2   R5

T1

**FIG. 7**

V

0V   t₀   t₁   t

71   I

73

72

-5V

**FIG. 8**

**EP 1 254 552 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2734111